# EUROPEAN PATENT SPECIFICATION

(11) **EP 3 381 844 B1**
(45) Date of publication and mention of the grant of the patent: **04.08.2021**
(21) Application number: 17169227.0
(22) Date of filing: 03.05.2017
(51) Int. Cl.: B65G 47/66

(54) **CONVEYOR TRANSFER SYSTEM**
TRANSFERSYSTEM FÜR EIN FÖRDERBAND
SYSTÈME DE TRANSFERT POUR UNE BANDE TRANSPORTEUSE

(30) Priority: 31.03.2017 ES 201700347
(43) Date of publication of application: 03.10.2018
(73) Proprietor: Afher Eurobelt, S.A., 47012 Valladolid (ES)
(72) Inventor: SAN MIGUEL NUÑEZ, Javier, 47012 Valladolid (ES)
(74) Representative: Temiño Ceniceros, Ignacio

(56) References cited:
- GB-A- 2 237 257
- JP-A- 2014 024 558
- JP-A- 2016 074 485
- US-A- 5 215 182
- US-A1- 2011 147 162
- US-A1- 2014 360 844

## Description

### TECHNICAL FIELD

The present invention relates to a transfer system comprising a transfer comb for transferring products between two belt conveyors of the type used in industry.

### PRIOR ART

Different types of belt conveyors are described in the prior art; conveyor systems are generally used to convey products, for example, in the packaging and food industries. Conveyor belts in these systems can be designed, for example, as rubber mats or metal mesh belts, but they can also be designed as modular chains or mats made of metal and/or plastic. Diverters may therefore be designed, for example, like pulleys, but also like single or multiple chain sprockets. In conveyor systems, a number of conveyor belts are often connected to one another successively. Examples of conveyors like those indicated are disclosed, for example, in patent documents ES2304266, EP1688374, EP2706023, EP2703321, EP2966012, EP2168890 and EP2145843.

Slide-over devices are used in those areas wherein products are to be conveyed to or from the conveyor surface, like in right angle transitions and in line transitions between conveyor belts and in processing stations. An example of such a slide-over device is a slide-over plate with fingers cooperating with slots formed on the surface of a belt conveyor, for example, as disclosed in patent document US6138819, or a slide-over device with fingers as disclosed in patent document EP0930254, or also as disclosed in patent document EP2990360.

Conveyor systems are used increasingly more for conveying small product batches.

Accumulation systems are used in many production processes for the purpose of preventing a production shutdown should any expected or unexpected event take place. Product accumulation tables for the purpose of temporarily holding the product and then introducing it into the production line at the appropriate time are used for these systems.

Conveyor systems are therefore preferably designed such that the conveyor system allows for product accumulations without human intervention.

A drawback of static slide-over plates, also referred to as plates with fingers or combs, is that at the end of a production run, the last of the products are left behind on slide-over plates or combs. In other words, there are problematic dead zones in the accumulation buffers that make the last row of products to be transferred require human intervention to literally push the products to the second conveyor belt.

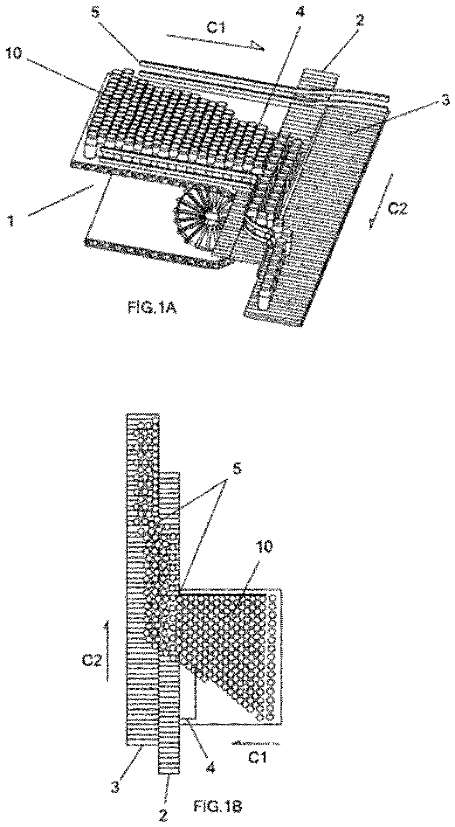

Furthermore, since accumulation takes place along the entire width of the conveyor systems or accumulation tables and combined with the fact that products must be discharged and incorporated into the production line in the least amount of time possible, said products normally accumulate at one of the ends of the transfer comb, subjecting the products in the first few rows to a great deal of pressure, sometimes even breaking them due to the pressure exerted by the products in the last few rows on the products in the first few rows. This effect is produced because in many cases the convergence or transfer between both (delivery and receiving) belts is done perpendicularly which, together with friction between the products and the belt and the speed of the receiving belt, causes the products to accumulate usually on the side or in the corner of the first (delivery) belt coinciding with the movement direction of the second (receiving) belt as shown in Figure 1 for example.

Conveyor systems have been developed wherein said systems comprise a superimposed transverse arrangement. To make the intermediate space as small as possible, the longitudinal edge of the second belt conveyor opposite the first belt conveyor can be provided with a chamfered portion, as described in patent document EP 0 722 896. A drawback of that conveyor system is that when fewer stable products are involved, the intermediate space between the first and second conveyor belts must be perfectly aligned. Since the chains are made primarily of plastic materials, the use and subsequent wear usually mean that this alignment will eventually be lost, such that the products may fall. The longitudinal edge of the second belt conveyor therefore forms a type of stop. An additional drawback is that the mentioned longitudinal edge may be damaged as a result of the products running into the edge.

Patent document ES2299728 describes intermediate elements comprising fingers preferably extending separately, uniformly and parallel to the conveying direction of the first belt conveyor. The rear parts of the fingers form a comb-shaped part of the slide-over surface at the inlet between the first conveyor surface and the second conveyor surface. With the aid of such comb-shaped slide-over surface, not only can the products be supported during sliding, but can also be prevented the entry of larger dirt particles into the transfer zone or space while smaller dirt particles can be discharged between fingers by the separation. As can be seen, it is a combination of the aforementioned prior art: transfer system with fingers or combs and an intermediate chain with a chamfered portion. This system therefore suffers from the same problems as the systems described above.

To solve this problem, patent document US5749454 describes a transfer system incorporating a plurality of electrically powered rollers rotating in the same movement direction of the first belt (or delivery belt), and although this reduces the dead zone and alleviates (but does not solve) the problem of the last row, the problem of material becoming jammed in a specific zone of the transfer zone increases, especially in belts arranged at a right angle, as shown in Figure 1 . In fact, if rollers are incorporated in the movement direction of the first (delivery) belt, the described effect is accentuated, enabling the generation of pressures that are high enough to damage the product when subjected to a greater pressure.

The document US 2011/147162 discloses a self-clearing conveyor transfer system for transferring articles between two mutually perpendicular conveyor belts. One version of the transfer system includes a finger transfer plate with fingers at one end extending into the end of a raised-rib belt and powered rollers at the opposite end rotating about axes perpendicular to the fingers. A second conveyor belt perpendicular to the raised-rib belt advances parallel to the roller axes. Articles transfer from one belt to the other across the finger transfer plate. Because the rollers are powered, straggling articles are not stranded on the transfer plate. US 2011/147162 discloses the features of the preamble of claim 1.

### DISCLOSURE OF THE INVENTION

An object of the invention relates to a transfer system comprising two belt conveyors wherein a first conveyor belt is the delivery belt for delivering a product in a first forward movement direction to the second conveyor belt or receiving belt in a second forward movement direction; and wherein between the first conveyor belt and the second conveyor belt said transfer system comprises a transfer comb which comprises a first region from which there project a plurality of tines parallel to one another, and wherein the transfer comb comprises a second flat region with at least one roller configured for rotating with respect to a horizontal shaft; and wherein the transfer system further comprises drive means for rotating said at least one roller. The transfer system is characterized in that the at least one roller is arranged obliquely with respect to a vertical axis of the tines; and in that the surface of at least one roller projects from the top and bottom of the horizontal defined by the surface of the second flat region such that the drive means can rotate said at least one roller in a direction opposite to the second forward movement direction of the second conveyor belt.

In a particular embodiment, the rollers are driven from the lower side by a spline that is integral with the second belt, such that said rollers rotate in a direction opposite to the second forward movement direction of the second conveyor belt. In another particular embodiment, the movement of the rollers is performed by means of an additional belt that is continuous and contiguous with respect to the second conveyor belt and the lower side of which drives the rollers. Finally, in another particular embodiment the rollers are motor-driven, but the rotational direction thereof must always be opposite and oblique with respect to the forward movement direction of the second conveyor belt or receiving belt and dislodging of the product.

The synergistic effect produced between the oblique arrangement of the at least one roller with respect to the vertical axis of the tines, and the rotation of the at least one roller in the direction opposite to the forward movement direction of the second conveyor belt cause when said product approaches the transfer zone between belts (i.e., the comb) the product to be driven by the movement of the at least one roller in the direction opposite to the forward movement direction of the second conveyor belt, increasing the transfer area between belts and preventing unwanted accumulations at one end or in a corner of the comb. So compared to the prior art, a larger transfer area (i.e. higher production capacity) is achieved, product accumulations in given zones of the transfer area causing products to break and become jammed are prevented, and furthermore the last row of a product run no longer has to be pushed manually since once it enters the roller zone of the comb, the movement of said rollers in combination with the inertia of the product coming from the first conveyor belt will make said products effectively transition onto the second belt without any brake whatsoever.

The invention is in accordance with the independent claims enclosed with the present specification. Dependent claims show particular embodiments of the invention according to the present specification.

Throughout the description and claims the word "comprises" and variants thereof do not intend to exclude other technical features, supplements, components or steps. For those skilled in the art, other objects, advantages and features of the invention will be understood in part from the description and in part from the practice of the invention. The following examples and drawings are provided by way of illustration and do not intend to limit the present invention. Furthermore, the present invention covers all the possible combinations of particular and preferred embodiments herein indicated.

### BRIEF DESCRIPTION OF THE DRAWINGS

A series of drawings aiding to better understand the invention and expressly related to an embodiment of said invention presented as a non-limiting example thereof is very briefly described below.
Figure 1 shows a transfer between two conveyor belts with a transfer comb like the ones described in the prior art, and wherein the problem of jamming in a given zone of the transfer area can be seen in a perspective view (Figure 1A) and in a plan view (Figure 1 B).
Figure 2 shows a detailed view of the transfer system object of the present invention, in a first practical embodiment with splines for driving the small rollers in a perspective view (Figure 2A), elevational view (Figure 2B) and an isolated detailed view of the transfer (Figure 2C).
Figure 3 shows a detailed view of the transfer system object of the present invention in a second practical embodiment with a flat band (PVC, PU, rubber, fabric or any material having equivalent features) for driving the small rollers in a perspective view (Figure 3A), elevational view (Figure 3B) and an isolated detailed view of the transfer (Figure 3C).
Figure 4 shows a detailed view of a third practical example of the transfer system not part of the present invention without any further element for driving the small rollers in a perspective view (Figure 4A), elevational view (Figure 4B) and isolated detailed view of the transfer (Figure 4C).
Figure 5 shows a transfer between two conveyor belts with a transfer system such as the one shown in Figure 2, and wherein it can be seen how the jamming problem in a given zone of the transfer area is solved in a perspective view (Figure 5A) and a plan view (Figure 5B).
Figure 6 shows a transfer between two conveyor belts with a transfer system like the one shown in Figure 3, and wherein it can be seen how is solved the jamming problem in a given zone of the transfer area in a perspective view (Figure 6A) and a plan view (Figure 6B).
Figure 7 shows a transfer between two conveyor belts with a transfer system like the one shown in Figure 3 both in a perspective view (Figure 7A) and in a plan view (Figure 7B).
Figure 8 shows a perspective view of a transfer between two conveyor belts with a transfer system like the one shown in Figure 4.
Figure 9 shows a perspective view of a transfer comb with small rollers, according to a practical embodiment of the present invention.
Figure 10 shows a perspective view of a transfer comb with small motor-driven rollers, according to a practical embodiment of the present invention.

### DETAILED DISCLOSURE OF THE INVENTION

The attached figures show different practical embodiments of the invention. The object of the present invention is to prevent the problem that is generated today in the transfers between two belt conveyors (1, 2), wherein a first conveyor belt (1) is the delivery belt for delivering a product (10) in a first forward movement direction (C1) to the second conveyor belt (2) or receiving belt in a second forward movement direction (C2) which in turn transfers the product (10) to a third conveyor belt (3). A comb (4) with a plurality of tines sandwiched between the links of the first conveyor belt (1) is used for the transfer, such that the pushing from the first belt (1) transfers the product (10) to the second belt (2) via the comb (4) and from said second belt (2) the product (10) is transferred to the third belt (3) since both belts, i.e., second belt (2) and third belt (3), run in parallel and the exchange is made easier by side guides (5).

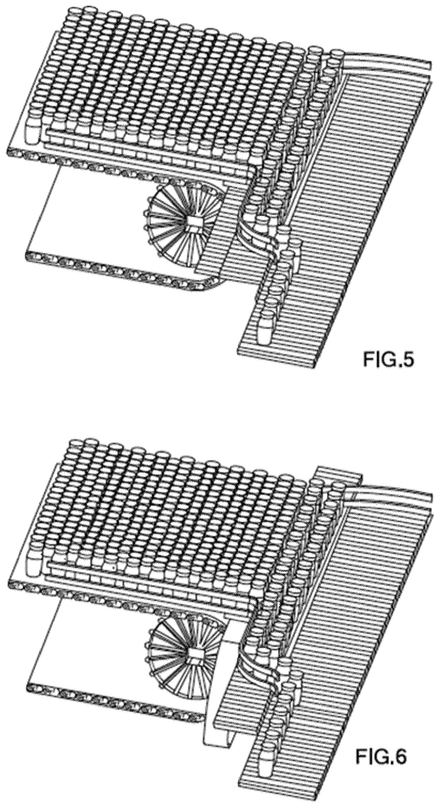

As can be seen in Figure 1 , precisely the movement in the second forward movement direction (C2) means that the product (10) that is already on the second belt (2) will gradually accumulate against a side guide (5), i.e., it will accumulate in the corner in favor of the second forward movement direction (C2), causing a jam which may even cause some of the product (10) to break due to the pressure exerted by the product (10) itself against the guide (5) in its forward movement while jamming occurs. To prevent this problem, the present invention describes a transfer system which prevents products (10) from accumulating in the corners of transfer zones as a result of the transfer comb (100, 100') (see Figures 5 a 7).

In order to better understand the present detailed disclosure, a tabulated summary of the different practical embodiments of the transfer comb of the transfer system of the present invention, the references used in the drawings and a brief description thereof is shown below:

| | | |
|---|---|---|
| 100 | Figure 9 | Transfer comb |
| 100' | Figure 10 | Motor-driven transfer comb |

The transfer comb (100, 100') of the transfer system of the present invention therefore has two practical embodiments, wherein, both comprise a first region (101) from which there project a plurality of tines (102) parallel to one another, and a second flat region (101') comprising at least one roller (103) configured for rotating with respect to a horizontal shaft (103a) and arranged obliquely with respect to a vertical axis of the tines (102). In a second embodiment, furthermore, at least one roller (103) is motor-driven (104) in its rotation with respect to its horizontal shaft (103a). In both embodiments, the surface of the rollers (103) projects from the top and bottom of the horizontal defined by the surface of the second flat region (101') such that drive means (20, 30) can rotate said roller (103) in practical embodiments of the transfer system.

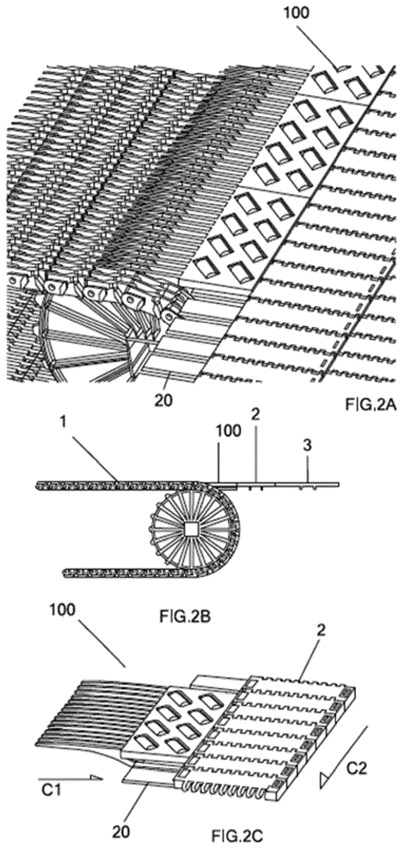

Both transfer combs (100, 100') can be used interchangeably in any of the practical embodiments of the transfer systems shown in Figures 2 to 8 and described below in greater detail.

As can be seen in the attached drawings, the present invention essentially comprises a transfer comb (100, 100') between two belt conveyors (1, 2) wherein a first conveyor belt (1) is the delivery belt for delivering a product (10) in a first forward movement direction (C1) to the second conveyor belt (2) or receiving belt in a second forward movement direction (C2) which in turn transfers the product (10) to a third conveyor belt (3). A comb (100), in this example one that is non-motor driven, with a plurality of tines (102) sandwiched between the links of the first conveyor belt (1) is used for the transfer, such that the pushing of the first belt (1) transfers the product (10) through the comb (100) to the second belt (2) and from this second belt (2) the product (10) is transferred to the third belt (3) since both the second belt (2) and third belt (3) run in parallel and the exchange is aided by side guides (5), as best seen in Figures 5 to 8 .

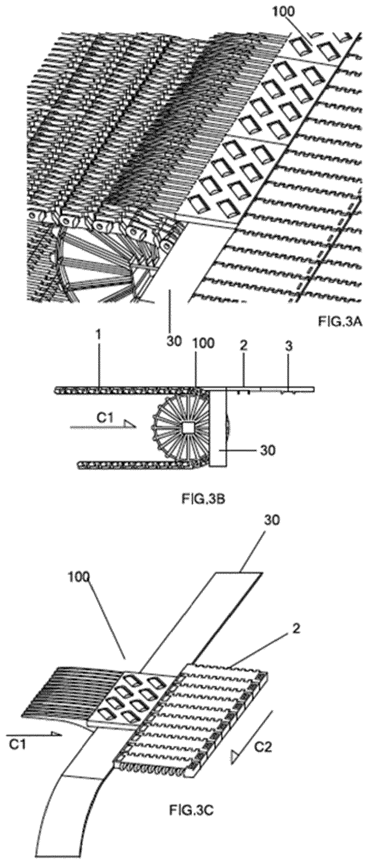

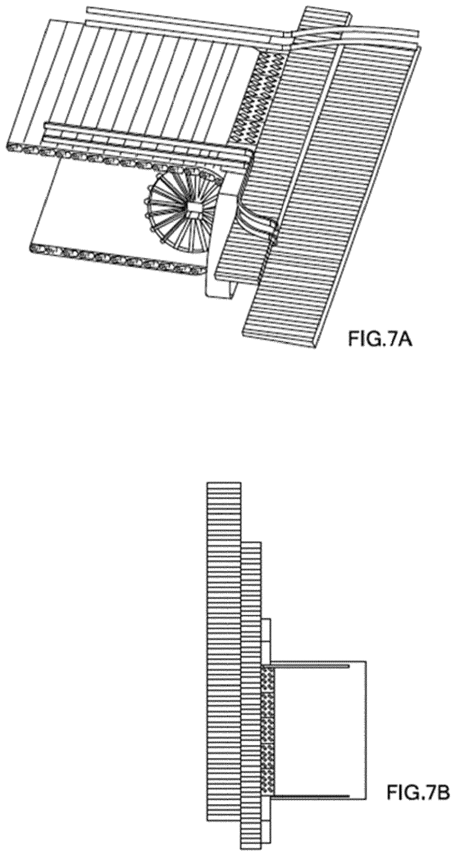

The comb (100) comprises at least one roller (103) arranged obliquely with respect to a vertical axis of the tines (102); and wherein said rollers (103) rotate in a direction opposite to the second forward movement direction (C2) of the second conveyor belt (2). In the first embodiment shown in detail in Figure 2, the transfer comb (100) comprises a plurality of rollers (103) that are driven from the lower side by at least one spline (20) integral with the second belt (2) in the second forward movement direction (C2). The splines (20) cause, at the pace established by the second belt (2) in its second forward movement direction (C2), the rollers (103) or small rollers to rotate in a direction opposite to second forward movement direction (C2). The effect of said rotation in a direction opposite to the forward movement direction of the second belt (2) causes the product (10) arranged in the first belt (1) to be directed in a direction that is oblique and opposite to the forward movement direction of the second belt (2), which causes the product (10) to be distributed in the entire transfer zone and accumulation in a single corner as occurred in conventional systems (Figure 1) is thereby prevented. This novel effect is shown in detail in Figure 5. Figure 3 and Figure 7 show essentially the same system described for Figure 2 , but in this case the splines (20) integral with the second belt (2) have been replaced with a flat band (30) made of a material selected from PVC, PU, rubber, fabric or any material having equivalent features, the rotation of which is independent of the rotation of the second belt (2), which makes it easier to implement different rotational speeds or directions depending on the specific application. In any case, the effect of said rotation in a direction opposite to the forward movement direction of the second belt (2) causes the product (10) arranged in the first belt (1) to be directed in a direction that is oblique and opposite to the forward movement direction of the second belt (2), which causes the product (10) to be distributed in the entire transfer zone and accumulation in a single corner as occurred in conventional systems (Figure 1) is thereby prevented This novel effect is shown in detail in Figure 6 .

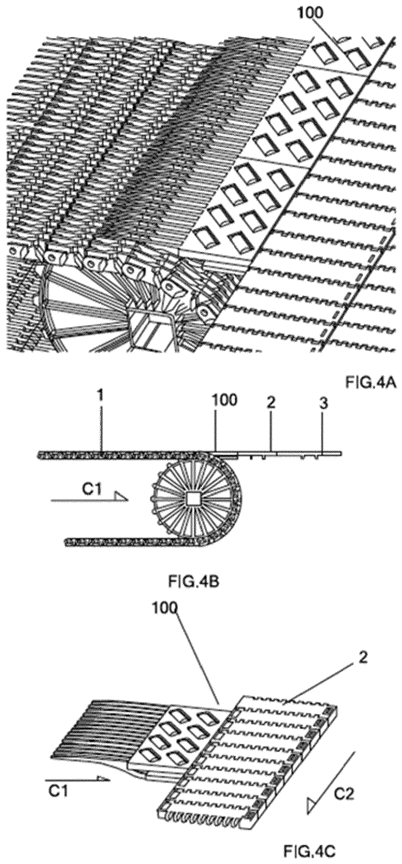

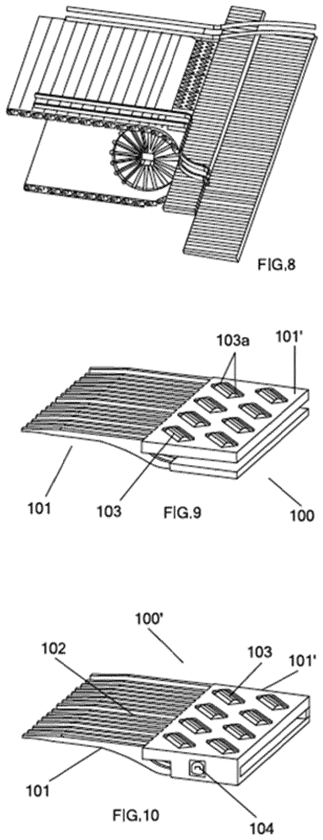

In a third practical example not part of the present invention shown in Figure 4 and in Figure 8 , there are no drive means (20, 30) of the rollers or small rollers (103), but the effect that is achieved is the same since the actual pushing of the product (10) in the forward movement direction of the first belt (1) makes when passing over the small rollers (103) is directed in a direction that is oblique and opposite to the forward movement direction of the second belt (2), which causes the product (10) to be distributed in the entire transfer zone and accumulation in a single corner as occurred in conventional systems (Figure 1) is thereby prevented.

## Claims

1. A transfer system comprising two belt conveyors (1, 2) wherein a first conveyor belt (1) is the delivery belt for delivering a product (10) in a first forward movement direction (C₁) to the second conveyor belt (2) or receiving belt in a second forward movement direction (C₂); and wherein between the first conveyor belt (1) and the second conveyor belt (2) said transfer system comprises a transfer comb (100, 100') which comprises a first region (101) from which there project a plurality of tines (102) parallel to one another, and wherein the transfer comb (100) comprises a second flat region (101') with at least one roller (103); and wherein the transfer system further comprises drive means (20, 30) for rotating said at least one roller (103);
**characterized in that**
the at least one roller (103) is configured for rotating with respect to a horizontal shaft (103a) and is arranged obliquely with respect to a vertical axis of the tines (102); and **in that** the surface of the at least one roller (103) projects from the top and bottom of the horizontal defined by the surface of the second flat region (101') such that the drive means (20,30) can rotate said at least one roller (103) in a direction opposite to the second forward movement direction (C₂) of the second conveyor belt (2).

2. The transfer system according to claim 1, wherein the at least one roller (103) is driven from the lower side by at least one spline (20) that is integral with the second belt (2) in the second forward movement direction (C₂).

3. The transfer system according to claim 1, wherein the at least one roller (103) is driven by a continuous belt (30) that is independent of the second belt (2) in the second forward movement direction (C₂).

4. The transfer system according to claim 1, wherein the at least one roller (103) is motor driven and the rotational direction of the at least one roller (103) is opposite and oblique with respect to the forward movement direction of the second conveyor belt (2).

## Patentansprüche

1. Transfersystem umfassend zwei Bandförderer (1, 2), wobei ein erstes Förderband (1) das Abgabeband zum Abgeben eines Produkts (10) in einer ersten Vorwärtsbewegungsrichtung (C₁) zum zweiten Förderband (2) oder Aufnahmeband in einer zweiten Vorwärtsbewegungsrichtung (C2) ist; und wobei zwischen dem ersten Förderband (1) und dem zweiten Förderband (2) das Transfersystem einen Transferkamm (100, 100') umfasst, der einen ersten Bereich (101) umfasst, aus dem eine Vielzahl von zueinander parallelen Zinken (102) vorsteht, und wobei der Transferkamm (100) einen zweiten flachen Bereich (101') mit mindestens einer Rolle (103) umfasst;
und wobei das Transfersystem ferner Antriebsmittel (20, 30) zum Drehen der mindestens einen Rolle (103) umfasst;
**dadurch gekennzeichnet, dass**
die mindestens eine Rolle (103) zur Drehung bezüglich einer horizontalen Welle (103a) konfiguriert ist und bezüglich einer vertikalen Achse der Zinken (102) schräg angeordnet ist;
und dadurch, dass die Oberfläche der mindestens einen Rolle (103) von der Ober- und Unterseite der durch die Oberfläche des zweiten flachen Bereichs (101') definierten Horizontalen vorsteht, so dass die Antriebsmittel (20, 30) die mindestens eine Rolle (103) in einer Richtung entgegengesetzt zur zweiten Vorwärtsbewegungsrichtung (C2) des zweiten Förderbandes (2) drehen können.

2. Transfersystem nach Anspruch 1, wobei die mindestens eine Rolle (103) von der unteren Seite von mindestens einer Keilwelle (20) angetrieben wird, die einstückig mit dem zweiten Band (2) in der zweiten Vorwärtsbewegungsrichtung (C2) ist.

3. Transfersystem nach Anspruch 1, wobei die mindestens eine Rolle (103) von einem Endlosband (30) angetrieben wird, das in der zweiten Vorwärtsbewegungsrichtung (C2) unabhängig von dem zweiten Band (2) ist.

4. Transfersystem nach Anspruch 1, wobei die mindestens eine Rolle (103) motorisch angetrieben ist und die Drehrichtung der mindestens einen Rolle (103) entgegengesetzt und schräg in Bezug auf die Vorwärtsbewegungsrichtung des zweiten Förderbandes (2) ist.

## Revendications

1. Système de transfert comprenant deux transporteurs à courroie (1, 2) dans lequel une première courroie transporteuse (1) est la courroie de distribution pour distribuer un produit (10) dans une première direction de déplacement vers l'avant (C₁) vers la deuxième courroie transporteuse (2) ou recevoir la courroie dans une deuxième direction de déplacement vers l'avant (C₂) ; et dans lequel entre la première courroie transporteuse (1) et la deuxième courroie transporteuse (2) ledit système de transfert comprend un peigne de transfert (100, 100') qui comprend une première région (101) à partir de laquelle se projettent une pluralité de dents (102) parallèles les unes aux autres, et dans lequel le peigne de transfert (100) comprend une deuxième région plate (101') avec au moins un rouleau (103) ;
et dans lequel le système de transfert comprend en outre des moyens d'entraînement (20, 30) pour faire tourner ledit au moins un rouleau (103) ;
**caractérisé en ce que**
l'au moins un rouleau (103) est configuré pour tourner par rapport à un arbre horizontal (103a) et est agencé obliquement par rapport à un axe vertical des dents (102) ; et **en ce que** la surface de l'au moins un rouleau (103) fait saillie du haut et du bas de l'horizontale définie par la surface de la deuxième région plate (101') de telle sorte que les moyens d'entraînement (20, 30) peuvent faire tourner ledit au moins un rouleau (103) dans une direction opposée à la deuxième direction de déplacement vers l'avant (C₂) de la deuxième courroie transporteuse (2).

2. Système de transfert selon la revendication 1, dans lequel l'au moins un rouleau (103) est entraîné depuis le côté inférieur par au moins une cannelure (20) qui est solidaire de la deuxième courroie (2) dans la deuxième direction de déplacement vers l'avant (C₂).

3. Système de transfert selon la revendication 1, dans lequel l'au moins un rouleau (103) est entraîné par une courroie continue (30) qui est indépendante de la deuxième courroie (2) dans la deuxième direction de déplacement vers l'avant (C₂).

4. Système de transfert selon la revendication 1, dans lequel l'au moins un rouleau (103) est entraîné par moteur et la direction de rotation de l'au moins un rouleau (103) est opposée et oblique par rapport à la direction de déplacement vers l'avant de la deuxième courroie transporteuse (2).
